# EUROPÄISCHE PATENTSCHRIFT

(11) **EP 3 668 764 B1**
(45) Veröffentlichungstag und Bekanntmachung des Hinweises auf die Patenterteilung: **05.05.2021**
(21) Anmeldenummer: 18730289.8
(22) Anmeldetag: 31.05.2018
(51) Int. Cl.: B60T 8/32, B60T 8/26, B60T 13/66

(54) **VERFAHREN ZUR VERZÖGERUNG EINES FAHRZEUGES, INSBESONDERE EINES NUTZFAHRZEUGES, SOWIE EIN ELEKTROPNEUMATISCHES BREMSSYSTEM ZUR DURCHFÜHRUNG DES VERFAHRENS UND FAHRZEUG MIT EINEM ELEKTROPNEUMATISCHEN BREMSSYSTEM**
METHOD FOR DECELERATING A VEHICLE, IN PARTICULAR A COMMERCIAL VEHICLE, AND ELECTRO-PNEUMATIC BRAKE SYSTEM FOR CARRYING OUT THE METHOD, AND VEHICLE HAVING AN ELECTRO-PNEUMATIC BRAKE SYSTEM
PROCÉDÉ POUR LA DÉCÉLÉRATION D'UN VÉHICULE, EN PARTICULIER D'UN VÉHICULE UTILITAIRE, AINSI QUE SYSTÈME DE FREINAGE ÉLECTROPNEUMATIQUE POUR L'EXÉCUTION DU PROCÉDÉ ET VÉHICULE COMPRENANT UN SYSTÈME DE FREINAGE ÉLECTROPNEUMATIQUE

(30) Priorität: 17.08.2017 DE 102017007788
(43) Veröffentlichungstag der Anmeldung: 24.06.2020
(73) Patentinhaber: WABCO GmbH, 30453 Hannover (DE)
(72) Erfinder: GOERS, Andreas, 30982 Pattensen (DE); BROCKMANN, Christoph, 30966 Hemmingen (DE); VAN THIEL, Julian, 30938 Grossburgwedel (DE)
(74) Vertreter: Schiller, Harald
(86) Internationale Anmeldenummer: PCT/EP2018/064341
(87) Internationale Veröffentlichungsnummer: WO 2019/034297

(56) Entgegenhaltungen:
- EP-A1- 1 132 274
- DE-A1-102010 021 909

## Beschreibung

Die Erfindung betrifft ein Verfahren zur Verzögerung eines Fahrzeuges, aufweisend ein Bremssystem mit wenigstens einer Vorderachse und wenigstens einer Hinterachse, einem Bremswertgeber mit einem Sensor zum Erzeugen von einem Bremssteuersignal zum Steuern und/oder Regeln des Bremssystems und wenigstens einem Achsmodulator, für die Vorderachse des Fahrzeugs, zum Steuern und/oder Regeln wenigstens eines Vorderachsbremsdrucks an der Vorderachse und/oder wenigstens einem Achsmodulator für die Hinterachse des Fahrzeugs, zum Steuern und/oder Regeln eines Hinterachsbremsdrucks an der Hinterachse des Fahrzeuges.

Bremssysteme und Verfahren zur Verzögerung eines Fahrzeuges sind hinlänglich bekannt. So zeigt die DE 10 2010 021 909 A1 eine druckmittelbetätigte und teilweise elektronische Bremsanlage eines Fahrzeugs mit wenigstens zwei Achsen, sowie ein Verfahren für ein derartiges Bremssystem mit einem elektronisch geregelten Hinterachsbremskreis und einem pneumatisch geregelten Vorderachsbremskreis. Dabei weist die Bremsanlage ein zweikanaliges pneumatisches Fußbremsventil auf, welches abhängig von einer Betätigung durch den Fahrer für einen Vorderachsbremskreis Bremsdrücke für Radbremsen einer Vorderachse, sowie für einen Hinterachsbremskreis Steuer- bzw. Backup-Drücke für Radbremsen einer Hinterachse erzeugt.

Die DE 101 33 440 C2 beschreibt wiederum eine Druckluftbremsanlage mit einem elektropneumatischen Modulator. Es handelt sich dabei um ein elektropneumatisches Druckluftbremssystem mit einer mehrkreisigen Betriebsbremse. Das Druckluftbremssystem weist zwei getrennte pneumatische Bremskreise auf, wobei mindestens zwei Kolben den ersten und den zweiten Bremskreis pneumatisch trennen.

Derartige Bremssysteme haben ohne Hinzunahme weiterer technischer Hardware das Problem, einen Verzögerungswunsch eines Fahrers sicher zu erkennen, um im Redundanzfall, d.h. z.B. bei Ausfall eines Sensors im Bremswertgeber, die entsprechende Bremsbetätigung an einer Achse ohne pneumatische Redundanz einzuleiten.

Sofern eine redundante Druckbeaufschlagung an allen Achsen nicht möglich ist, muss das Bremssystem mit einem zusätzlichen Wegsensor ausgestattet werden. Der Einsatz eines zusätzlichen Wegsensors weist allerdings aufgrund der zusätzlich benötigten Hardware, wie dem dritten Wegsensor, einen Kostennachteil auf und schränkt damit die Wettbewerbsfähigkeit des Bremssystems in der Automobilbranche bzw. in der Branche der Nutzfahrzeuge ein.

Zudem benötigt die zusätzliche Hardware mehr Bauraum in einem Fahrzeug, was aus Sicht eines Fahrzeugherstellers nicht erwünscht ist.

Die Erfindung liegt der Aufgabe zugrunde, ein Verfahren zur Verzögerung eines Fahrzeugs, ein Bremssystem eines Fahrzeuges, zur Durchführung des Verfahrens zur Verzögerung eines Fahrzeuges, sowie ein Fahrzeug selbst bereitzustellen, das die o.g. Nachteile überwindet und den Verzögerungswunsch eines Fahrers sicher bestimmt, um die entsprechende Bremsbetätigung an einer Achse ohne pneumatische Redundanz einleiten zu können.

Erfindungsgemäß wird die gestellte Aufgabe durch ein Verfahren zur Verzögerung eines Fahrzeuges gelöst, wobei ein Redundanzsignal an einer ersten Achse, der Vorderachse oder Hinterachse oder in einem Anhängersteuerventil, erzeugt wird und mittels des Redundanzsignals ein Bremsdruck einer zweiten Achse, der Hinterachse oder der Vorderachse, gesteuert und/oder geregelt wird.
Dabei wird die Vorderachse pneumatisch gesteuert und/oder geregelt und die Hinterachse elektropneumatisch gesteuert und/oder geregelt Es ist aber auch denkbar, dass die Vorderachse elektropneumatisch gesteuert und/oder geregelt wird und die Hinterachse pneumatisch gesteuert und/oder geregelt wird. Eine andere Möglichkeit ist zudem, dass wenigstens ein Anhängersteuerventil pneumatisch gesteuert und/oder geregelt wird und die Vorderachse oder die Hinterachse elektropneumatisch gesteuert und/oder geregelt wird.

Dabei wird in einer bevorzugten Ausgestaltung ein pneumatischer Redundanzdruck an der Vorderachse eingestellt. Dieser Redundanzdruck wird an der Vorderachse gemessen und als Redundanzsignal an die Hinterachse übermittelt. An der Hinterachse wird das Redundanzsignal als Hilfsbremsdruck ausgesteuert.
Es ist aber auch möglich, dass der pneumatische Redundanzdruck an der Hinterachse eingestellt wird. In dem Fall wird der pneumatische Redundanzdruck an der Hinterachse gemessen und als Redundanzsignal an die Vorderachse übermittelt. An der Vorderachse wird dann das Redundanzsignal als Hilfsbremsdruck ausgesteuert. Alternativ kann auch der pneumatische Redundanzdruck an einem Anhängersteuerventil ermittelt werden und als Redundanzsignal zur Regelung oder Steuerung des Hilfsbremsdrucks an mindestens einer weiteren Fahrzeugachse, wie zum Beispiel einer Vorderachse oder einer Hinterachse herangezogen werden.

In einer weiteren vorteilhaften Ausgestaltung entspricht das Redundanzsignal einen pneumatischer Redundanzdruck der Vorderachse, der Hinterachse oder eines Anhängersteuerventils zum Regeln des Hilfsbremsdrucks der Hinterachse oder der Vorderachse. Es sind keine zusätzlichen kostenintensiven Bauteile, wie pneumatische Leitungen, Sensoren oder Auswerteeinrichtungen an dem Fahrzeug notwendig.

Der pneumatische Redundanzdruck wird in vorteilhafter Weise mittels eines Drucksensors an der Vorderachse, der Hinterachse oder im Anhängersteuerventil zum Steuern und/oder Regeln des Hilfsbremsdrucks der Hinterachse oder des Hilfsbremsdrucks der Vorderachse ermittelt. Der Drucksensor misst den, an der Vorderachse oder der Hinterachse anliegenden pneumatischen Redundanzdruck und leitet den gemessenen pneumatischen Redundanzdruck als Drucksensorsignal an ein Zentralmodul oder eine weitere elektrische Steuereinheit, wie zum Beispiel an eine elektronische Steuereinheit, einer elektronischen Parkbremse oder direkt an einen Achsmodulator der zweiten Achse, insbesondere der Hinterachse oder der Vorderachse, des Fahrzeugs weiter. Das Drucksensorsignal entspricht dem Redundanzsignal.

In einer weiteren vorteilhaften Ausgestaltung ist der Drucksensor in dem Achsmodulator der Hinterachse, in dem Achsmodulator der Vorderachse oder dem Anhängersteuerventil des Bremssystems integriert. Damit kann der pneumatische Redundanzdruck an der Vorderachse, der Hinterachse oder dem Anhängersteuerventils sehr genau bestimmt werden, da keine Druckverluste durch lange Übertragungswege auftreten.

Darüber hinaus ist das Redundanzsignal in einer weiteren vorteilhaften Ausgestaltung ein elektrisches Redundanzsignal zum Regeln des Hilfsbremsdrucks der Vorderachse oder des Hilfsbremsdrucks der Hinterachse. Insbesondere in Anti-Blockier-Systemen (ABS) steht in den Achsmodulatoren kein Drucksensor zur Verfügung, der einen Redundanzdruck messen und ein entsprechendes pneumatisches Redundanzsignal ausgeben kann. Fällt die elektronische Erfassung der Bremspedalbetätigung des Fahrers aus oder sind die empfangenen Signale unplausibel, wird das elektrische Redundanzsignal über das Zentralmodul an den Achsmodulator der Vorderachse oder an den Achsmodulator der Hinterachse ausgesteuert. Das elektrische Redundanzsignal wird in diesem Fall, in einer weiteren vorteilhaften Ausgestaltung wenigstens mit einem Raddrehzahlsensor, insbesondere zur Verzögerung der Vorderachse oder der Hinterachse, im Bremssystem ermittelt. Sofern kein Drucksensor zum Messen des pneumatischen Redundanzdrucks vorhanden ist, aus denen der anliegende Bremsdruck der Vorderachse oder der Hinterachse ermittelt werden kann, ermittelt der mindestens eine Raddrehzahlsensor eines Antriebrades der Vorderachse oder der Hinterachse des Fahrzeugs die Verzögerung bzw. den Schlupf des zumindest einen Rades der Vorderachse oder der Hinterachse, wo der pneumatisch ausgesteuerte Redundanzdruck anliegt und leitet die gemessene Verzögerung bzw. den gemessenen Schlupf als elektrisches Redundanzsignal zur Plausibilisierung der Bremssteuersignale oder zur Steuerung und/oder Regelung eines Hilfsbremsdrucks direkt an das Zentralmodul oder an einen Achsmodulator der Hinterachse oder der Vorderachse des Fahrzeugs weiter.

Vorteilhaft ist der mindestens eine Raddrehzahlsensor an wenigstens einem Rad der Vorderachse oder wenigstens an einem Rad der Hinterachse des Bremssystems angeordnet. Konkret umfasst der Raddrehzahlsensor ein Polrad, welches mit einer Radnabe des Vorderrades oder mit einer Radnabe des Hinterrades verbunden ist und einem Stabsensor. Der Stabsensor ist mit einer Klemme oder einem Sensorhalter, in einer Bohrung eines Achsschenkels der Vorderachse oder eines Achsschenkels der Hinterachse verschiebbar geklemmt. Durch die Drehbewegung des mit der Radnabe verbundenen Polrades wird der von der Sensorspule des Stabsensors erfasste magnetische Fluss geändert und dadurch eine Wechselspannung erzeugt, deren Frequenz proportional der Radgeschwindigkeit ist. Wenn der Raddrehzahlsensor an wenigstens einem Rad der Vorderachse angeordnet ist, dann erfasst der Raddrehzahlsensor die Radgeschwindigkeiten an der Vorderachse und sendet diese als elektrisches Redundanzsignal über zumindest eine erste Signalleitung vom Achsmodulator der Vorderachse zum Zentralmodul oder einer weiteren elektrischen Steuereinheit und vom Zentralmodul oder der weiteren elektrischen Steuereinheit über eine dritte Signalleitung zum Achsmodulator der Hinterachse. Wenn der Raddrehzahlsensor an wenigstens einem Achsschenkel der Hinterachse angeordnet ist, dann erfasst der Raddrehzahlsensor die Radgeschwindigkeiten der Hinterachse und sendet diese als elektrisches Redundanzsignal über zumindest eine dritte Signalleitung vom Achsmodulator der Hinterachse zum Zentralmodul oder einer weiteren elektrischen Steuereinheit und vom Zentralmodul oder der weiteren elektrischen Steuereinheit über eine erste Signalleitung zum Achsmodulator an der Vorderachse.

Vorteilhaft ist zudem in einer weiteren Ausgestaltung, dass ein zweites Bremssteuersignal mit dem ersten Bremssteuersignal verglichen wird, um die Korrektheit oder das Vorhandensein des ersten und/oder des zweiten Bremssteuersignals zu ermitteln. Zuvor wird die Betätigung des Bremspedals erfasst. Ein erster Wegsensor ermittelt ein erstes elektronisches Bremssteuersignal und ein zweiter Wegsensor des Bremswertgebers ermittelt ein zweites elektronisches Bremssteuersignal Anschließend wird das erste Bremssteuersignal mit dem zweiten Bremssteuersignal verglichen. Das erste Bremssteuersignal und das zweite Bremssteuersignal dienen zum Ansteuern eines Einlassventils und eines Auslassventils von dem Achsmodulator der Vorderachse und dem Achsmodulator der Hinterachse. Die Überprüfung der Bremssteuersignale ist eine Sicherheitsfunktion. Damit ist gewährleistet, dass sowohl an der Vorderachse, als auch an der Hinterachse des Fahrzeugs der gleiche bzw. der richtige Bremsdruck anliegt, um die vom Fahrer gewünschte Verzögerung im Fahrzeug zu erreichen und das Fahrzeug gleichmäßig, d.h. ohne ein Ausbrechen oder Schlingern, gemäß dem Fahrerwunsch abgebremst wird.

In einer weiteren vorteilhaften Ausgestaltung, wird das Redundanzsignal mit dem ersten und/oder zweiten Bremssteuersignal in dem Bremswertgeber oder in dem Zentralmodul miteinander verglichen, um die Korrektheit oder das Vorhandensein des ersten Bremssteuersignals und/oder des zweiten Bremssteuersignals zu plausibilisieren.

Darüber hinaus wird die gestellte Aufgabe durch ein elektropneumatisches Bremssystem und ein Fahrzeug zur Durchführung eines Verfahrens zur Verzögerung des Fahrzeuges gelöst. Das elektropneumatische Bremssystem weist wenigstens einen Bremswertgeber mit wenigstens einem Sensor zum Erzeugen von einem Bremssteuersignal zum Steuern und/oder Regeln des Bremssystems und wenigstens einen Achsmodulator für eine Vorderachse des Fahrzeugs zum Regeln und/oder Steuern wenigstens eines Hilfsbremsdrucks an der Vorderachse und/oder wenigstens einen Achsmodulator für eine Hinterachse des Fahrzeugs, zum Regeln und/oder Steuern eines Hilfsbremsdrucks an der Hinterachse sowie in/an einem Anhängersteuerventil zum Regeln und/oder Steuern eines Hilfsbremsdrucks am Anhängerbremsanschluss des Fahrzeugs auf. Das elektropneumatische Bremssystem ist dazu ausgebildet, bei einem fehlenden oder fehlerhaften Bremssteuersignal des wenigstens einen Sensors des Bremswertgebers ein Redundanzsignal an der Vorderachse, der Hinterachse oder dem Anhängersteuerventil zu ermitteln und das Redundanzsignal zur Verzögerung der wenigstens einen Vorderachse oder alternativ der wenigstens einen weiteren Achse, insbesondere der Hinterachse, zu verwenden.

Daraus ergibt sich der Vorteil, dass keine zusätzlichen Bauteile, wie beispielsweise ein dritter Sensor im Bremswertgeber verwendet werden müssen, um eine entsprechende sichere Bremsbetätigung, ausgehend von dem Verzögerungswunsch eines Fahrers, an einer Achse ohne pneumatischer Redundanz einzuleiten. Der Sensor des Bremswertgebers kann als Wegsensor, Drehwinkelsensor und/oder Drucksensor ausgebildet sein. Zudem wird die mindestens eine weitere Achse weiterhin elektropneumatisch geregelt. Anders ausgedrückt, bei Bremssystemen mit einer pneumatisch gebremsten Vorderachse und einer elektropneumatisch gebremsten Hinterachse, sind keine pneumatischen Leitungen im Bremssystem vorgesehen, die den pneumatischen Redundanzdruck vom Bremswertgeber an die Hinterachse führen.

In einer weiteren vorteilhaften Ausgestaltung entspricht das Redundanzsignal einem pneumatischen Redundanzdruck oder einem elektrischen Redundanzsignal zum Steuern und/oder Regeln des Hilfsbremsdrucks der Vorderachse oder alternativ der Hinterachse.

Das Redundanzsignal entspricht vorteilhaft einem pneumatischen Redundanzdruck, wenn der Achsmodulator der Vorderachse, der Hinterachse oder das Anhängersteuerventil des Fahrzeugs einen Drucksensor aufweist. Hingegen entspricht das Redundanzsignal in vorteilhafter Weise einem weiteren elektrischen Redundanzsignal, wenn das Bremssystem ein Antiblockiersystem ist und der Achsmodulator an der Vorderachse, der Hinterachse oder des Anhängersteuerventils des Fahrzeugs keinen Drucksensor aufweist. Das Redundanzsignal wird dann über mindestens einen Raddrehzahlsensor an der Vorderachse oder an der Hinterachse ermittelt.

Zudem weist das elektropneumatische Bremssystem eine pneumatische Einlassventilleitung zu wenigstens einem Einlassventil und wenigstens einem Auslassventil des Achsmodulators der Vorderachse oder zu wenigstens einem Einlassventil und wenigstens einem Auslassventil des Achsmodulators der Hinterachse auf, wobei das Einlassventil und das Auslassventil des Achsmodulators der Vorderachse oder das Einlassventil und das Auslassventil des Achsmodulators der Hinterachse zur Ermittlung des Redundanzsignal geschlossenen ist, da sowohl das Einlassventil, als auch das Auslassventil bei einem plausiblen Fahrerwunsch unbestromt sind da die elektrische Drucksteuerung deaktiviert ist. Das elektropneumatische Bremssystem weist zudem wenigstens ein Vorderachs-Redundanzventil des Achsmodulators der Vorderachse oder alternativ wenigstens ein Hinterachs-Redundanzventil des Achsmodulators der Hinterachse auf, das zur Ermittlung des Redundanzsignals geöffnet ist. Das Vorderachs-Redundanzventil ist im unbestromten Zustand, d.h. wenn die elektrische Drucksteuerung deaktiviert ist, in einer geöffneten Stellung.

In einer weiteren vorteilhaften Ausgestaltung weist das Bremssystem wenigstens einen Raddrehzahlsensor zur Ermittlung des elektrischen Redundanzsignals, insbesondere der Verzögerung der Hinterachse oder der Vorderachse, des Fahrzeugs im Bremssystem auf. Der Raddrehzahlsensor ist insbesondere an einem Rad oder innerhalb eines Rades, bspw. An einer Radnabe eines Rades des Fahrzeugs angeordnet. Es ist auch denkbar, dass der Raddrehzahlsensor an der Vorderachse oder der Hinterachse des Fahrzeugs angeordnet ist.

Weiterhin hat es sich von Vorteil erwiesen, dass ein zweiter Sensor im Bremswertgeber dazu ausgebildet ist, ein zweites Bremssteuersignal zu erzeugen. Der zweite Sensor dient dabei der Absicherung, falls der erste Sensor nicht funktionsfähig ist oder fehlerhaft ist und den von dem Fahrer gewünschten Bremsdruck bzw. den Verzögerungswunsch nicht an dem Achsmodulator der Hinterachse und/oder der Vorderachse weiterleiten kann.

In einer weiteren vorteilhaften Ausgestaltung ist das erste elektronische Bremssteuersignal dazu ausgebildet ein Einlassventil und ein Auslassventils von dem Achsmodulator der Vorderachse anzusteuern und/oder das zweite elektronische Bremssteuersignal ist dazu ausgebildet, ein Einlassventil und ein Auslassventils von dem Achsmodulator der Hinterachse anzusteuern.

Vorteilhaft ist es auch, dass das Bremssystem dazu ausgebildet ist, den Hilfsbremsdruck der Hinterachse oder der Vorderachse mit dem Redundanzsignal direkt zu steuern und/oder zu regeln. Wenn die elektrische Erfassung der Bremspedalbetätigung im Bremswertgeber ausfällt, wird der Fahrerwunsch bzw. das Redundanzsignal, über den Raddrehzahlsensor oder über den Drucksensor der Vorderachse, der Hinterachse oder des Anhängersteuerventils des Fahrzeugs ermittelt. Mit dem Redundanzsignal wird mindestens der Hilfsbremsdruck einer weiteren Achse im Fahrzeug geregelt oder gesteuert, an der der Redundanzdruck nicht ermittelt wurde.

Nachfolgend werden ausgewählte Ausführungsbeispiele der Erfindung anhand der beigefügten Zeichnungen erläutert.

Es zeigt:
Fig. 1 eine schematische Ansicht eines Fahrzeugs, bei dem das Bremssystem als Elektrisches Bremssystem ausgebildet ist,
Fig. 2 eine schematische Teilansicht eines Fahrzeugs mit einer Vorderachse, bei dem das Bremssystem als elektrisches Bremssystem ausgebildet ist,
Fig. 3 eine schematische Ansicht eines Achsmodulators,
Fig. 4 eine schematische Ansicht eines Bremswertgebers,
Fig. 5 eine schematische Ansicht eines Fahrzeuges, bei dem das Bremssystem als Antiblockiersystem ausgebildet ist.

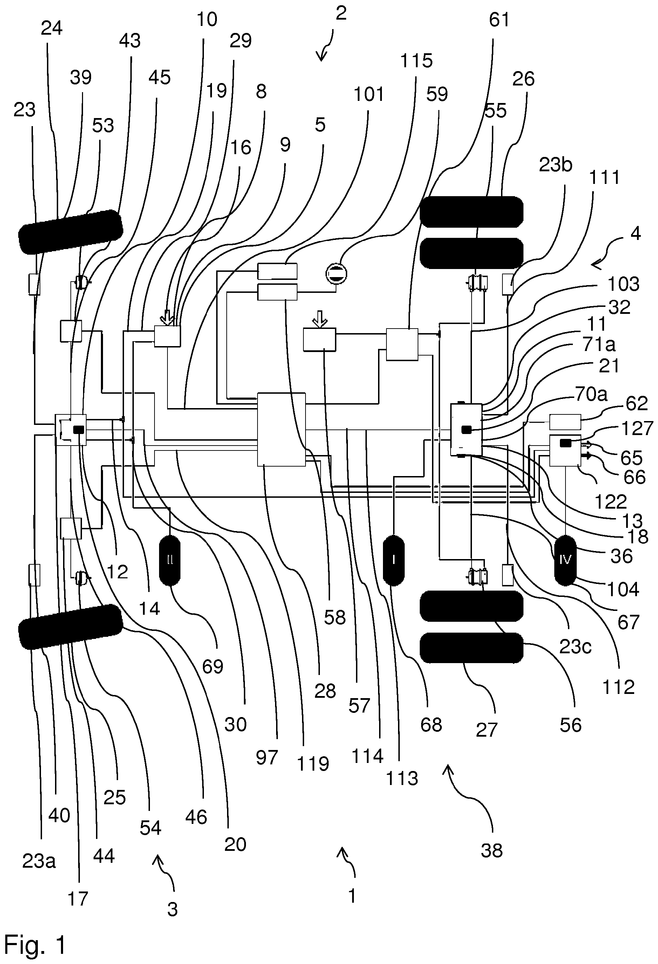

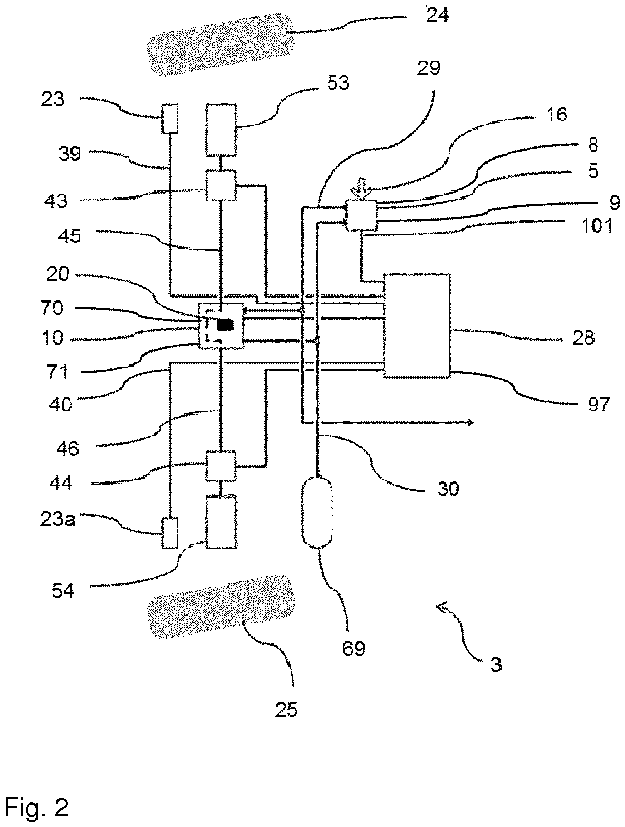

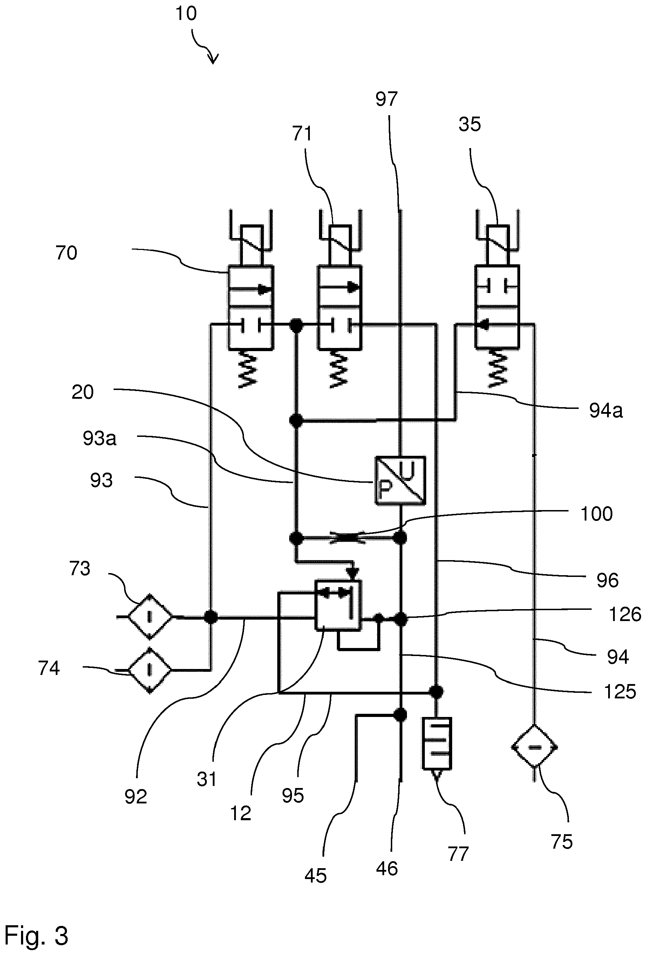

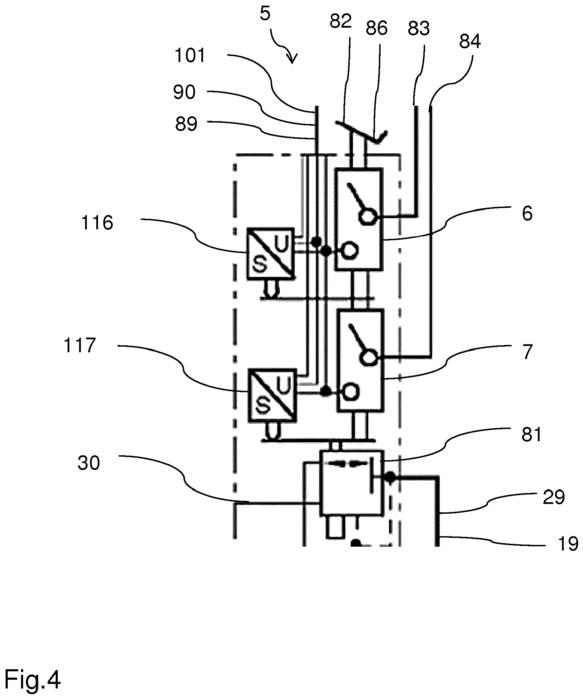

Die Fig. 1 zeigt ein elektropneumatisches Bremssystem 2 eines Fahrzeugs 1, welches als elektrisches Bremssystem (EBS) 38 ausgebildet ist. Zunächst wird das elektrische Bremssystem 38 allgemein beschrieben. Das EBS 38 weist einen Bremswertgeber 5 auf. Der Bremswertgeber 5 erhält den Verzögerungswunsch des Fahrers über ein Bremspedal 16 und erzeugt mit einem ersten Wegsensor 116 (dargestellt in Fig. 4) ein erstes elektronisches Bremssteuersignal 8 und mit einem zweiten Wegsensor 117 (dargestellt in Fig. 4) ein zweites elektronisches Bremssteuersignal 9 zum Ansteuern eines Einlassventils 70 und eines Auslassventils 71 von dem Achsmodulator 10 der Vorderachse 3 und zum Ansteuern eines Einlassventils 70a und eines Auslassventils 71a von dem Achsmodulator 11 der Hinterachse 4. Das Einlassventil 70 und das Auslassventil 71 der Vorderachse 3 sind in Fig. 2 und Fig. 3 gezeigt. Ein Zentralmodul 28 steuert bzw. regelt und überwacht das EBS 38. Weiterhin ist an einer Vorderachse 3 des Fahrzeugs 1 der Achsmodulator 10 der Vorderachse 3 und an einer Hinterachse 4 des Fahrzeugs 1, der Achsmodulator 11 der Hinterachse 4 angeordnet. Der Achsmodulator 10 der Vorderachse 3 steuert einen Vorderachsbremsdruck 12 und der Achsmodulator 11 der Hinterachse 4 steuert einen Hinterachsbremsdruck 13
Die Vorderachse 3 weist ein erstes Rad 24 und ein zweites Rad 25 auf. An der Hinterachse 4 sind ein erstes Rad 26 der Hinterachse 4 und ein zweites Rad 27 der Hinterachse 4 angeordnet. An jedem Rad 24, 25, 26, 27 ist Raddrehzahlsensor 23, 23a, 23b, 23c angeordnet. Der erste Raddrehzahlsensor 23 ist über eine erste Raddrehzahlsensorsignalleitung 39 und der zweite Raddrehzahlsensor 23a ist über eine zweite Raddrehzahlsensorsignalleitung 40 mit dem Achsmodulator 10 der Vorderachse 3 verbunden. Der dritte Raddrehzahlsensor 23b ist über eine dritte Raddrehzahlsensorsignalleitung 41 und der vierte Raddrehzahlsensor 23c ist über eine vierte Raddrehzahlsensorsignalleitung 42 mit dem Achsmodulator 10 der Vorderachse 4 verbunden. Über die Raddrehzahlsensoren 23, 23a, 23b, 23c erfassen die Achsmodulatoren 10, 11 Radgeschwindigkeiten der Räder 24, 25, 26, 27 und werten sie aus. Die aktuelle Radgeschwindigkeit ermittelt der Raddrehzahlsensor 23, 23a, 23b, 23c permanent über ein nicht dargestelltes Polrad des jeweiligen Raddrehzahlsensors 23, 23a, 23b, 23c. Die Auswertung der Sensorsignale ergibt ein genaues Bild über den Schlupf der Vorderachse und/oder der Hinterachse 4 und damit indirekt auch über ihre Drücke in der Bremsleistung. Ist der Schlupf unterschiedlich, wird die Vorderachse 3 oder die Hinterachse 4 stärker als die andere Achse 3, 4 des Fahrzeugs 1 abgebremst. Folglich verschleißt diese Achse 3, 4 auch stärker. Das EBS 38 regelt mittels Differenzschlupfregelung den Vorderachsbremsdruck 12 an der Vorderachse 3 und den Hinterachsbremsdruck 13 an der Hinterachse 4 so, dass die Bremskräfte über Bremszylinder 53, 54, 55, 56 auf die Räder 24, 25, 26, 27 optimal verteilt werden. Dabei sind die Bremszylinder 53 und 54 an der Vorderachse 3 angeordnet. Die Bremszylinder 55 und 56 hingegen sind an der Hinterachse 4 angeordnet.
An der Vorderhachse 3 sind weiterhin zwei Antiblockiersystem-Magnetregelventile (ABS-Magnetregelventile) 43, 44 angeordnet. Die ABS-Magnetregelventile 43, 44 sind über je eine Magnetregelventilleitung 45, 46 mit dem Achsmodulator 10 der Vorderachse 3 verbunden. Bei einer normalen Bremsung des Fahrzeugs 1, das heißt, wenn die Räder 24, 25 der Vorderachse 3 nicht blockieren, sind die ABS-Magnetregelventile 43, 44 geöffnet. Wenn zumindest ein Vorderrad 24, 25 blockiert, dann schließt ein nicht dargestelltes Einlassventil des ABS-Magnetregelventils 43, 44 dessen Vorderrad 24, 25. Das ABS-Magnetregelventil 43, 44, bei dem das Einlassventil geschlossen ist, lässt keinen Druck zu einem der Bremszylinder 53, 54 der Vorderachse 3 mehr durch. Die Blockierung in zumindest dem einen Vorderrad 24, 25 wird aufgehoben, wodurch das Fahrzeug 1 sicher abgebremst wird.
Darüber hinaus stellt ein Lenkradwinkelsensor 59 einen Messwert eines Absolutwinkels, d.h. die Position eines nicht dargestellten Lenkrads bereit. Dies umfasst die Möglichkeit, durch die Sensorkalibrierung die Nullstellung des Lenkrads (Mittelposition) zu identifizieren. Der Lenkradwinkelsensor 59 kommuniziert mit dem Zentralmodul 28 über eine Bremssystem-Datenbus-Schnittstelle 58.

Eine Batterie 115 versorgt das Zentralmodul 28 mit Energie. Zudem weist das Fahrzeug 1 ein Parkbremsbedienelement 57 auf. Das Parkbremsbedienelement 57 kommuniziert über ein elektropneumatisches Handbremssystem (EPHS) 61 mit dem Zentralmodul 28. Über eine Anhänger- Bremssystem-Datenbus-Schnittstelle 62 kommuniziert das Zentralmodul 28 mit einem nicht dargestellten Anhänger des Fahrzeugs 1. Es findet daher ein Signal- bzw. Kommunikationsaustausch zwischen dem Fahrzeug 1 und dem Anhänger statt. Ein Anhängersteuerventil 122 überträgt einen geforderten Anhängerbremsdruck 65 an den Anhänger. Das Anhängersteuerventil 122 ist zudem mit einem Vorratsdruckspeicher 67 verbunden. Ein weiterer Vorratsdruckspeicher 68 ist mit dem Achsmodulator 11 der Hinterachse 4 verbunden. Darüber hinaus ist ein dritter Vorratsdruckspeicher 69 mit dem Bremswertgeber 5 und dem Achsmodulator 10 der Vorderachse 3 verbunden.
Allgemein wird eine Betätigung des Bremspedals 16 mit dem Bremswertgeber 5 erfasst. Dabei wird das erste Bremssteuersignal 8 und das zweite Bremssteuersignal 9 moduliert. Dann wird das zweite Bremssteuersignal 9 mit dem ersten Bremssteuersignal 8 im Bremswertgeber 5 verglichen. Mögliche Fehler können ein elektrischer Ausfall im Bremswertgeber 5 oder unplausible bzw. sich unterscheidende Bremssteuersignale 8 und 9 sein. Das elektrische Bremssystem 38 nach Fig. 1 ist so ausgebildet, das je nach Fehler im Bremswertgeber 5 oder bei einem Ausfall des Bremswertgebers 5, die Vorderachse 3 pneumatisch und die Hinterachse 4 elektropneumatisch abgebremst werden kann. Es kann aber auch die Hinterachse 4 pneumatisch und die Vorderachse 3 elektropneumatisch abgebremst werden. Die Funktionsweise wird im Folgenden beispielhaft an dem EBS 38 erklärt, bei dem die Vorderachse 3 pneumatisch und die Hinterachse 4 elektropneumatisch abgebremst wird. Wenn der Bremswertgeber 5 nicht fehlerfrei oder funktionsfähig ist, dann wird der Pedalhub als pneumatischer Redundanzdruck 19 über eine pneumatische Leitung 29 des Bremswertgebers 5 vom Bremswertgeber 5 zum Achsmodulator 10 übertragen. Der Drucksensor 20 misst den pneumatischen Redundanzdruck 19 und erzeugt ein elektrisches Drucksensorsignal 119. Das elektrische Drucksensorsignal 119 wird über eine erste Signalleitung 97 vom Achsmodulator 10 zum Zentralmodul 28 übertragen. Zudem misst der erste Raddrehzahlsensor 23, die erste Radgeschwindigkeit 103 des ersten Vorderrades 24. Der zweite Raddrehzahlsensor 23a misst die zweite Radgeschwindigkeit 104 des zweiten Vorderrades 25. Die erste Raddrehzahlsensorsignalleitung 39 des ersten Raddrehzahlsensors 23 überträgt die gemessene erste Radgeschwindigkeit 103 des ersten Vorderrades 24, vom Radrehzahlsensor 23 zum Achsmodulator 10. Die zweite Raddrehzahlsensorsignalleitung 40 des zweiten Raddrehzahlsensors 23a wiederum, überträgt die gemessene zweite Radgeschwindigkeit 104 des zweiten Vorderrades 24, vom zweiten Raddrehzahlsensor 23a zum Achsmodulator 10. Anschließend wird aus der ersten Radgeschwindigkeit 103 und der zweiten Radgeschwindigkeit 104 eine Gesamtradgeschwindigkeit der Vorderachse 3 gebildet. Die Gesamtradgeschwindigkeit der Vorderachse 105 wird über die erste Signalleitung 97 vom Achsmodulator 10 zum Zentralmodul 28 übertragen. Anschließend wird das elektrische Drucksensorsignal 119 im Zentralmodul mit dem ersten Bremssteuersignal 8 oder dem zweiten Bremssteuersignal 9 verglichen und ein Sollwert gebildet. Der Sollwert und die Gesamtradgeschwindigkeit bzw. der daraus resultierende Radschlupf und oder die Verzögerung bilden ein Hilfsbremssteuersignal. Aus dem Hilfsbremssteuersignalsignal berechnet das Zentralmodul 28 einen Drucksollwert 113 für die Hinterachse 4 des Fahrzeugs 1. Von dem Zentralmodul 28 wird der Drucksollwert 113 über eine dritte Signalleitung 114 zu einem Drucksensor 21 des Achsmodulators 11 der Hinterachse 4 übertragen. In dem Achsmodulator 11 der Hinterachse 4 wird auf Basis des Drucksollwerts 113 ein Hilfsbremsdruck 18 moduliert. Der Hilfsbremsdruck 18 wird über die erste Bremszylinderleitung 103, an den Bremszylinder 55 des ersten Hinterrades 26 und über eine zweite Bremszylinderleitung 104, an den Bremszylinder 56 des zweiten Hinterrades 27 weitergeleitet. Das erste Hinterrad 26 und das zweite Hinterrad 27 werden dann entsprechend dem Hilfsbremsdruck 18 abgebremst.

Die Fig. 2 zeigt die Vorderachse 3 des Fahrzeugs 1 mit dem elektrischen Bremssystem 38 im Detail. Die Fig. 2 weist alle Bauteile der Vorderachse 3 nach Fig. 1 auf, weshalb diese nicht näher erläutert werden.

Fig. 3 zeigt eine mögliche Ausführungsform des Achsmodulators 10 der Vorderachse 3 und den Achsmodulator 11 der Hinterachse 4. Beispielhaft wird die eine mögliche Ausführungsform als Achsmodulators 10 für die Vorderachse 3 beschrieben. Der Achsmodulator 10 weist ein Einlassventil (EV) 70, ein Auslassventil (AV) 71 und ein Vorderachs-Redundanzventil (RV) 35 auf. Die Ventile 70, 71, 35 sind als Magnetregelventile ausgebildet. Zudem sind ein Drucksensor 20, ein Relaisventil 31 und ein Schalldämpfer 77 in dem Achsmodulator 10 angeordnet. Weiterhin ist ein erster Vorratsdruckspeicher 69 (nicht dargestellt) über einen ersten Luftfilter 73 und über eine Relaisventilleitung 92 mit dem Relaisventil 31 und über eine Einlassventilleitung 93, mit dem Einlassventil 70 verbunden. Zudem ist der Vorratsdruckspeicher 69 (nicht dargestellt) über einen zweiten Luftfilter 74 und über eine Relaisventilleitung 92 mit dem Relaisventil 31 und über eine Einlassventilleitung 93 mit dem Einlassventil 70 und ein dritter Luftfilter 75 ist über eine Redundanzventilleitung 94 mit dem RV 35 verbunden. Der doppelte Anschluss des Vorratsspeicher 69 über die Luftfilter 73, 74 an den Achsmodulator 10, dient der Erhöhung des zu erzielenden Volumenstroms. Eine zweite Redundanzventilleitung 94a ist von dem RV 35 zu einer zweiten Einlassventilleitung 93a angeordnet. Der Schalldämpfer 77 ist über eine erste Auslassventilleitung 95 mit dem Relaisventil 31 und über eine zweite Auslassventilleitung 96 mit dem Auslassventil 71 verbunden. Weiterhin ist die erste Signalleitung 97 des Achsmodulators 10 vom Drucksensor 20 zu der nicht dargestellten Achsmodulatorsteuereinheit gezeigt. Die zweite Ventileinlassleitung 93a ist vom Einlassventil 70 und vom Auslassventil 71 zum Relaisventil 31 angeordnet. Eine Blende 100 verbindet die zweite Einlassventilleitung 93a über eine Relaisregelventilverbindungsleitung 126 mit einer Relaisventildrucksteuerleitung 125 des Achsmodulators 10.
Bei einem Abbremsen des Fahrzeugs 1, wird das Relaisventil 31 mit Vorderachsbremsdruck 12 von dem zweiten nicht dargestellten Druckspeicher 69 über das EV 70 beaufschlagt. Von dem Relaisventil 31 wird der Vorderachsbremsdruck 12 über die Magnetregelventilleitung 45 des ersten Rades 24 der Vorderachse 3 zu dem ABS-Magnetregelventil 43 des ersten Rades 24 und anschließend zu dem Bremszylinder 53 des ersten Rades 24 durchgesteuert. Zudem wird der Vorderachsbremsdruck 12 von dem Relaisventil 31 über die Magnetregelventilleitung 46 des zweiten Rades 25 der Vorderachse 3, zu dem ABS-Magnetregelventil 44 des zweiten Rades 25 der Vorderachse 3 und anschließend zu dem Bremszylinder 54 des zweiten Rades 25 durchgesteuert. Bei einem Ausfall des Bremswertgebers 5, wird das EV 70, das AV und das RV deaktiviert. Das EV 70, AV 71 und das RV sind daher unbestromt. Der pneumatischer Redundanzdruck 19 wird über den Redundanzanschluss und anschließend über das Relaisventil 31 verstärkt und über die Magnetregelventilleitung 45 des ersten Rades 24 der Vorderachse 3 zu dem ABS-Magnetregelventil 43 des ersten Rades 24 und anschließend zu dem Bremszylinder 53 des ersten Rades 24 durchgesteuert.
Zudem wird der pneumatischer Redundanzdruck 19 von dem Relaisventil 31 über die Magnetregelventilleitung 46 des zweiten Rades 25 der Vorderachse 3, zu dem ABS-Magnetregelventil 44 des zweiten Rades 25 der Vorderachse 3 und anschließend zu dem Bremszylinder 54 des zweiten Rades 25 durchgesteuert. Das RV 35 ist dabei geöffnet, also unbestromt. Darüber hinaus wird der pneumatische Redundanzdruck 19 im Drucksensor 20 der Vorderachse 3 gemessen und als elektrisches Drucksensorsignal 119 über die erste Signalleitung 97 an das Zentralmodul 28 übertragen.

Die Fig. 4 zeigt den Aufbau des Bremswertgebers 5. Der Bremswertgeber 5 weist einen ersten Wegsensor 116 einen zweiten Wegsensor 117, einen ersten Schalter 6 und einen zweiten Schalter 7 auf. Der pneumatische Teil des Bremswertgebers 5 besteht aus einem Bremswertgeberrelaisventil 81, einer pneumatischen Druckversorgungsleitung 30 von dem Bremswertgeberrelaisventil 81 zum Vorratsdruckspeicher 69 der Vorderachse. Das Bremswertgeberrelaisventil wird allgemein über einen Stößel betätigt, der den Pedalweg bzw. die Pedalkraft des Bremspedals 16 an das Bremswertgeberrelaisventil 81 weiterleitet. Die pneumatischen Druckleitung 29 ist zudem mit einem Anschluss am Achsmodulator 10 der Vorderachse 3 verbunden. Der Bremswertgeber 5 erhält den Verzögerungswunsch des Fahrers über das Bremspedal 16 und erzeugt das erste Bremssteuersignal 8 und das zweite elektrische Bremssteuersignal 9 zum Belüften des Einlassventils 70 und Entlüften des Auslassventils 71 der Achsmodulatoren 10, 11, sowie den einen pneumatischen Redundanzdruck 19 zum Aussteuern eines Hilfsbremsdrucks 17 der Vorderachse 3 oder des Hilfsbremsdrucks 18 der Hinterachse 4. Sobald das Bremspedal 16 betätigt wird, werden im Bremswertgeber 5 zunächst das erste Bremssteuersignal 8 und das zweite Bremssteuersignal 9 generiert und auf verglichen, ob die Bremssteuersignale 8, 9 den Verzögerungswunsch des Fahrers entsprechen. Das erste Bremssteuersignal 8 und das zweite Bremssteuersignal werden von dem Bremswertgeber 5 über eine zweite Signalleitung 101 zum Zentralmodul 28 weitergeleitet. Die Bremssteuersignale 8, 9 werden für den Betrieb und die Überwachung des Bremsverfahrens verwendet. Die Betätigung des ersten Schalters 6 und des zweiten Schalters 7 erfolgt mechanisch.
Die Betätigung des Bremspedals 16 wird als Pedalhub von dem ersten Wegsensor 116 und dem zweiten Wegsensor 117 aufgezeichnet und vom Bremswertgeber 5 als erstes Wegsignal 89 und als zweites Wegsignal 90 an das Zentralmodul 28 ausgegeben. Das erste und das zweite Wegsignal 89, 90 werden über die zweite Signalleitung 101, von dem Bremswertgeber 5 zu dem Zentralmodul 28 übertragen.
Wenn der Bremswertgeber 5 nicht fehlerfrei oder funktionsfähig ist, dann wird der der Fahrerwunsch über den pneumatischen Redundanzdruck 19 von dem Relaisventil 81 des Bremswertgebers 5 direkt über die pneumatische Leitung 29 zu dem Drucksensor 20 des Achsmodulators 10 der Vorderachse 3 ausgesteuert.

Wenn das elektropneumatische Bremssystem 2 als Anti-Blockier-System (ABS) 201 ausgebildet ist bzw. kein Drucksensor zur Redundanzdruckmessung im System vorhanden ist, dann wird bei einem nicht fehlerfreien Bremswertgeber 250 der Fahrerwunsch als elektrisches Redundanzsignal 22 über den Redundanzdruck 19 im Anhängersteuerventil 122 oder den Schlupf und die Verzögerung über die Raddrehzahlsensoren 223, 223a, 223b, 223c ermittelt.

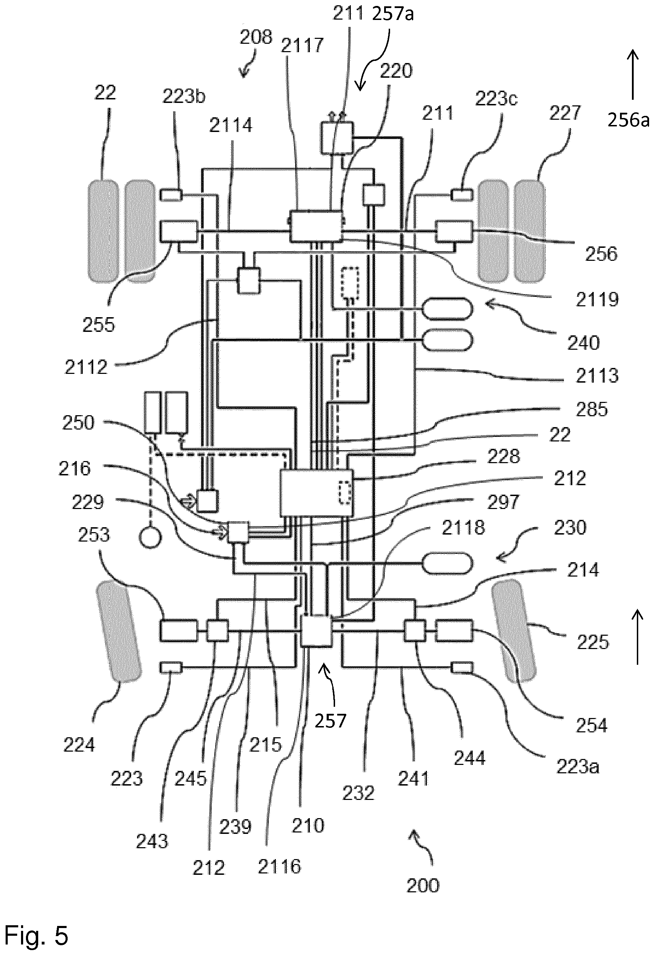

Die Fig. 5 zeigt das elektropneumatische Bremssystem 2 eines Fahrzeugs 200, welches als Anti-Blockier-System (ABS) 201 ausgebildet ist. ABS 201 hat die Aufgabe, das Blockieren von Fahrzeugrädern 224, 225, 226, 227 infolge zu kräftiger Betätigung der Betriebsbremse vornehmlich auf niedrigem Reibwert zu verhindern. Dadurch sollen auch bei Vollbremsungen, Seitenführungskräfte an gebremsten Fahrzeugrädern 224, 225, 226, 227 erhalten bleiben, um so Fahrstabilität und Lenkfähigkeit eines Fahrzeugs 200 oder einer Fahrzeugkombination im Rahmen der physikalischen Möglichkeiten zu gewährleisten. Zugleich soll unter Ausnutzung des verfügbaren Kraftschlusses zwischen den Fahrzeugrädern 224, 225, 226, 227 und der Fahrbahn der Bremsweg und die Fahrzeugverzögerung optimiert werden.

Das ABS 201 weist im Aufbau, gleiche Bauteile wie das EBS 38 auf. Diese Bauteile werden in dem Ausführungsbeispiel nicht mehr näher erläutert. Zudem zeigt das Beispiel ein Abbremsen des Fahrzeugs 200 mit einem ABS 201, bei dem eine Vorderachse 230 pneumatisch und eine Hinterachse 240 elektropneumatisch abgebremst wird. Aufgrund der gleichen Funktionsweise ist es auch möglich, dass die Hinterachse 240 pneumatisch und die Vorderachse 230 elektropneumatisch abgebremst werden. Es wird auf die Beschreibung gemäß der Fig. 1 verwiesen. Das ABS 201 weist, entgegen dem EBS 38, allgemein keinen Drucksensor 20 in einem Achsmodulator 210 der Vorderachse 230 und keinen Drucksensor 21 in einem Achsmodulator 211 der Hinterachse 240 auf. Vielmehr weist der Achsmodulator 210 ein Relaisventil 2116 mit möglicher Vorsteuerung durch ein 3/2-Wegeventil 2118 auf. Die ABS-Regelventile 243, 244 sind dem Relaisventil 2116 nachgeschaltet.

Zudem werden Radgeschwindigkeiten der Raddrehzahlsensoren 223, 223a direkt von einem Zentralmodul 228 eingelesen. Das Gleiche gilt für Radgeschwindigkeiten 2110, 2111 der Raddrehzahlsensoren 223b, 223c der Hinterachse 240. Das heißt, die Radgeschwindigkeit 2103 des ersten Raddrehzahlsensors 223 der Vorderachse 230, wird vom Raddrehzahlsensor 223, über eine erste Raddrehzahlsensorsignalleitung 239 des ersten Raddrehzahlsensors 223, zu einem Zentralmodul 228 übertragen und ausgewertet.

Die Radgeschwindigkeit 2104 des zweiten Raddrehzahlsensors 223a der Vorderachse 230 wird vom Raddrehzahlsensor 223a, über eine zweite Raddrehzahlsensorsignalleitung 241 des zweiten Raddrehzahlsensors 223a, zum Zentralmodul 228 übertragen und ausgewertet.

Die Radgeschwindigkeit 2110 des Raddrehzahlsensors 223b der Hinterachse 240 wird vom Raddrehzahlsensor 223b, über eine dritte Raddrehzahlsensorsignalleitung 2112 des Raddrehzahlsensors 223b, zum Zentralmodul 228 übertragen und ausgewertet.

Die Radgeschwindigkeit 2111 des Raddrehzahlsensors 223c der Hinterachse 240 wird vom Raddrehzahlsensor 223a, über eine vierte Raddrehzahlsensorsignalleitung 2113 des Raddrehzahlsensors 223c, zum Zentralmodul 228 übertragen und ausgewertet. Allgemein wird auch im ABS 208, die Betätigung eines Bremspedals 216, mit dem Bremswertgeber 250 erfasst.

Wenn der Bremswertgeber 250 nicht fehlerfrei oder funktionsfähig ist, dann wird der Fahrerwunsch indirekt über den pneumatischen Redundanzdruck 19 direkt zum Achsmodulator 210 der Vorderachse 230 durchgesteuert. Der Vorderachsbremsdruck 212 wird über eine pneumatische Leitung 229 vom Bremswertgeber 250 zum Achsmodulator 210 übertragen. Über das Vorderachs-ABS-Ventil 233 des Achsmodulators 210, wird der Vorderachsbremsdruck 212 vom Achsmodulator 210 zum einen über eine Magnetregelventilleitung 245 des ersten Rades 224 der Vorderachse 230, zu einem Magnetregelventil 243 des ersten Vorderrades 224 übertragen. Von einem Magnetregelventil 243 wird der Vorderachsbremsdruck 212 auf deinen Bremszylinder 253 des ersten Vorderades 224 übertragen. Entsprechend den Vorderachsbremsdruck 212, wird das erste Vorderrad 224 abgebremst. Zum anderen wird der Vorderachsbremsdruck 212 vom Achsmodulator 210 über eine Magnetregelventilleitung 246 des zweiten Rades 225 der Vorderachse 230, zu einem Magnetregelventil 244 des zweiten Vorderrades 225 übertragen. Vom Magnetregelventil 245 wird der Vorderachsbremsdruck 212 auf einem Bremszylinder 254 des zweiten Vorderades 225 übertragen. Entsprechend den Vorderachsbremsdruck 212, wird das erste Vorderrad 225 abgebremst. Die von den Raddrehzahlsensoren 223, 223a erfassten Radgeschwindigkeiten 2103, 2104 werden anschließend im Zentralmodul 228 eingelesen und ausgewertet. Zudem wird bei einem nicht fehlerfreien Bremswertgeber 250 der Fahrerwunsch als elektrisches Redundanzsignal 22 indirekt über die Raddrehzahlen bzw. den daraus abgeleiteten Radschlupf 257, 257a und der Verzögerung 256, 256a des Fahrzeuges bestimmt und vom Zentralmodul 228 zur Ansteuerung des Achsmodulators 220 der Hinterachse 240 verwendet.

Bezugszeichenliste für ein elektropneumatisches Bremssystem als Teil der Beschreibung
- 1: Fahrzeug
- 2: Elektropneumatisches Bremssystem
- 3: Vorderachse
- 4: Hinterachse
- 5: Bremswertgeber
- 6: Erster Schalter Bremswertgeber
- 7: Zweiter Schalter Bremswertgeber
- 8: Erstes Bremssteuersignal
- 9: Zweites Bremssteuersignal
- 10: Achsmodulator der Vorderachse
- 11: Achsmodulator der Hinterachse
- 12: Vorderachsbremsdruck
- 13: Hinterachsbremsdruck
- 14: Redundanzsignal
- 16: Bremspedal
- 17: Hilfsbremsdruck der Vorderachse 3
- 18: Hilfsbremsdruck der Hinterachse 4
- 19: pneumatischer Redundanzdruck
- 20: Drucksensor des Achsmodulators 10 der Vorderachse 3
- 21: Drucksensor des Achsmodulators 11 der Hinterachse 4
- 22: Elektrisches Redundanzsignal
- 23: Erster Raddrehzahlsensor der Vorderachse 3
- 23a: Zweiter Raddrehzahlsensor der Vorderachse
- 23b: Erster Raddrehzahlsensor der Hinterachse 4
- 23c: Zweiter Raddrehzahlsensor der Hinterachse 4
- 24: Erstes Rad der Vorderachse 3
- 25: Zweites Rad der Vorderachse 3
- 26: Erstes Rad der Hinterachse 4
- 27: Zweites Rad der Hinterachse 4
- 28: Zentralmodul
- 29: Pneumatische Leitung des Bremswertgebers 5
- 30: Druckversorgungsleitung des Bremswertebers 5 und des Achsmodulators 10 der Vorderachse 3
- 31: Relaisventil
- 35: Vorderachs-Redundanzventil
- 36: Hinterachs-Redundanzventil
- 38: Elektrisches Bremssystem (EBS)
- 39: Erste Raddrehzahlsensorsignalleitung des ersten Raddrehzahlsensor 23 der Vorderachse 3
- 40: Zweite Raddrehzahlsensorsignalleitung des zweiten Raddrehzahlsensor 23a der Vorderachse 3
- 41: Dritte Raddrehzahlsensorsignalleitung des dritten Raddrehzahlsensor 23b
- 42: Vierte Raddrehzahlsensorsignalleitung des vierten Raddrehzahlsensor 23c
- 43: Antiblockiersystem (ABS)-Magnetregelventil des ersten Rades 24 der Vorderachse 3
- 44: Antiblockiersystem (ABS)-Magnetregelventil des zweiten Rades 25 der Vorderachse 3
- 45: Magnetregelventilleitung des ersten Rades 24 der Vorderachse 3
- 46: Magnetregelventilleitung des zweiten Rades 25 der Vorderachse 3
- 53: Bremszylinder des ersten Rades 24 der Vorderachse 3
- 54: Bremszylinder des zweiten Rades 25 der Vorderachse 3
- 55: Bremszylinder des ersten Rades 26 der Hinterachse 4
- 56: Bremszylinder des zweiten Rades 27 der Hinterachse 4
- 57: Parkbremsbedienelement
- 58: Bremssystem-Datenbus-Schnittstelle
- 59: Lenkradwinkelsensor
- 61: Elektropneumatisches Handbremssystem
- 62: Anhänger- Bremssystem-Datenbus-Schnittstelle
- 65: Anhängerbremsdruck
- 66: Anhängervorratsdruck
- 67: Vorratsdruckspeicher des Anhänger Steuerventils 122
- 68: Vorratsdruckspeicher des Achsmodulator 11 der Hinterachse 4
- 69: Vorratsdruckspeicher des Achsmodulator 10 der Vorderachse 3 und des Bremswertgebers 5
- 70: Einlassventil des Achsmodulators 10 der Vorderachse 3
- 70a: Einlassventil des Achsmodulators 11 der Hinterachse 4
- 71: Auslassventil des Achsmodulators 10 der Vorderachse 3
- 71a: Auslassventil des Achsmodulators 10 der Hinterachse 4
- 73: erster Luftfilter
- 74: zweiter Luftfilter
- 75: dritter Luftfilter
- 77: Schalldämpfer der Achsmodulator 10
- 81: Bremswergeberrelaisventil
- 89: Erstes Wegsignal des Bremswertgebers 5
- 90: Zweites Wegsignal des Bremswertgebers 5
- 92: Relaisventilleitung des Achsmodulators 10, 11
- 93: Einlassventilleitung
- 93a: zweite Einlassventilleitung
- 94: Redundanzventilleitung
- 94a: zweite Redundanzventilleitung
- 95: Erste Auslassventilleitung
- 96: Zweite Auslassventilleitung
- 97: Erste Signalleitung vom Achsmodulator 10 der Vorderachse 3 zum Zentralmodul 28
- 100: Blende
- 101: Zweite Signalleitung vom Zentralmodul 28 zum Bremswertgeber 5
- 113: Drucksollwert
- 114: Dritte Signalleitung vom Achsmodulator 11 der Hinterachse 4 zum Zentralmodul 28
- 115: Batterie
- 116: Erster Wegsensor des Bremswertgebers 5
- 117: Zweiter Wegsensor des Bremswertgebers 5
- 119: Elektrisches Drucksensorsignal
- 122: Anhängersteuerventil
- 123: Redundanzventil des Anhängersteuerventils 122
- 124: Drucksteuerventil des Anhängersteuerventils 122
- 125: Relaisventildrucksteuerleitung
- 126: Relaisregelventilverbindungsleitung
- 127: Drucksensor des Anhängersteuerventils 122

Bezugszeichenliste für ein elektropneumatisches Anti-Blockier-System als Teil der Beschreibung
- 200: Fahrzeug
- 201: Anti-Blockier-System (ABS)
- 210: Achsmodulator der Vorderachse 230
- 211: Achsmodulator der Hinterachse 240
- 212: Vorderachsbremsdruck
- 214: Steuerleitung des Magnetregelventils 243 des ersten Vorderrades 224
- 215: Steuerleitung des Magnetregelventils 244 des zweiten Vorderrades 225
- 216: Bremspedal
- 220: Achsmodulator der Hinterachse 240
- 223: Erster Raddrehzahlsensor der Vorderachse 230
- 223a: Zweiter Raddrehzahlsensor der Vorderachse 230
- 223b: Erster Raddrehzahlsensor der Hinterachse 240
- 223c: Zweiter Raddrehzahlsensor der Hinterachse 240
- 224: Erstes Vorderrad des Fahrzeuges 200
- 225: Zweites Vorderrad des Fahrzeuges 200
- 226: Erstes Hinterrad des Fahrzeuges 200
- 227: Zweites Hinterrad des Fahrzeuges 200
- 228: Zentralmodul des Fahrzeugs 200
- 229: Pneumatische Leitung vom Bremswertgeber 250 zum Achsmodulator 210
- 230: Vorderachse des Fahrzeugs 200
- 233: Vorderachs-ABS-Ventil
- 234: Hinterachs-ABS-Ventil
- 239: erste Raddrehzahlsensorsignalleitung des ersten Raddrehzahlsensors 223
- 240: Hinterachse
- 241: zweite Raddrehzahlsensorsignalleitung des zweiten Raddrehzahlsensors 223a
- 243: ABS-Ventil des ersten Vorderrades 224
- 244: ABS-Ventil des zweiten Vorderrades 225
- 245: Magnetregelventilleitung des ersten Vorderrades 224
- 246: Magnetregelventilleitung des zweiten Vorderrades 225
- 250: Bremswertgeber des Fahrzeugs 200
- 253: Bremszylinder des ersten Vorderrades 224
- 254: Bremszylinder des zweiten Vorderrades 225
- 256: Verzögerung der Vorderachse 3 des Fahrzeugs 200
- 256a: Verzögerung der Hinterachse 4 des Fahrzeugs 200
- 257: Radschlupf der Vorderachse 3
- 257a: Radschlupf der Hinterachse 4
- 2112: dritte Raddrehzahlsensorsignalleitung des ersten Raddrehzahlsensors 223b der Hinterachse 240
- 2113: vierte Raddrehzahlsensorsignalleitung des zweiten Raddrehzahlsensors 223c der Hinterachse 240
- 2114: Bremszylinderleitung des ersten Hinterrades 226
- 2115: Bremszylinderleitung des zweiten Hinterrades 227
- 2116: Relaisventil des Achsmodulators der Vorderachse 230
- 2117: Relaisventil des Achsmodulators der Hinterachse 208
- 2118: 3/2-Wegeventil des Achsmodulators der Vorderachse 230
- 2119: 3/2-Wegeventil des Achsmodulators der Hinterachse 208

## Patentansprüche

1. Verfahren zur Verzögerung eines Fahrzeuges (1; 200), aufweisend ein elektropneumatisches Bremssystem (2) mit wenigstens einer Vorderachse (3; 230) und wenigstens einer Hinterachse (4; 240), einem Bremswertgeber (5; 250) mit wenigstens einem Sensor (116, 117) zum Erzeugen von einem Bremssteuersignal (8, 9) zum Steuern und/oder Regeln des Bremssystems (2) und wenigstens einem Achsmodulator (10; 210), für die Vorderachse (3; 230) des Fahrzeugs (1), zum Steuern und/oder Regeln wenigstens eines Vorderachsbremsdruck (12) an der mindestens einen Vorderachse (3; 230) und/oder wenigstens einem Achsmodulator (11; 220), für die Hinterachse (4, 240) des Fahrzeugs (1; 200), zum Steuern und/oder Regeln eines Hinterachsbremsdrucks (13) an der mindestens einen Hinterachse (4; 240) des Fahrzeuges (1; 200), **gekennzeichnet durch** folgende Schritte:
a. Erzeugen eines Redundanzsignals (14) an einer ersten Achse, der Vorderachse (3; 230) oder Hinterachse (4; 240), oder einem Anhängersteuerventil (122)
b. Steuern und/oder Regeln eines Hilfsbremsdrucks (17, 18) an einer anderen Achse, der Vorderachse (3; 230) oder der Hinterachse (4; 240), mittels des Redundanzsignals (14).

2. Verfahren zur Verzögerung eines Fahrzeuges (1) nach Anspruch 1, **dadurch gekennzeichnet, dass** das Redundanzsignal (14) ein pneumatischer Redundanzdruck (19) der Vorderachse (3) oder der Hinterachse (4) oder des Anhängersteuerventils (122) zum Steuern und/oder Regeln des Hilfsbremsdrucks (17, 18) der Vorderachse (3) oder der Hinterachse (4) ist.

3. Verfahren zur Verzögerung eines Fahrzeuges (1) nach Anspruch 2, **dadurch gekennzeichnet, dass** der pneumatische Redundanzdruck (19) mittels eines Drucksensors (20, 21, 127) an der Vorderachse (3), der Hinterachse (4) oder dem Anhängersteuerventil (122) zum Steuern und/oder Regeln des Hilfsbremsdrucks (17) der Vorderachse (3) oder des Hilfsbremsdrucks (18) der Hinterachse (4) ermittelt wird.

4. Verfahren zur Verzögerung eines Fahrzeuges (1) nach Anspruch 3, **dadurch gekennzeichnet, dass** der Drucksensor (20, 21, 127) in dem Achsmodulator (10) der Vorderachse (3) und/oder in dem Achsmodulator (11) der Hinterachse (4) und/oder einem Anhängersteuerventil (122) des elektropneumatischen Bremssystems (2) integriert ist.

5. Verfahren zur Verzögerung eines Fahrzeuges (200) nach Anspruch 1, **dadurch gekennzeichnet, dass** das Redundanzsignal (14) ein elektrisches Redundanzsignal (22) zum Steuern/oder Regeln des Hilfsbremsdrucks (17) der Vorderachse (3) oder des Hilfsbremsdrucks (18) der Hinterachse (4) ist.

6. Verfahren zur Verzögerung eines Fahrzeuges (200) nach Anspruch 5, **dadurch gekennzeichnet, dass** das elektrische Redundanzsignal (22) wenigstens mit einem Raddrehzahlsensor (23, 23a, 23b, 23c), insbesondere durch eine Verzögerung (256) der Vorderachse (230) oder der Verzögerung (256a) einer Hinterachse (240) und/oder über einen Radschlupf (257) der Vorderachse (230) oder einen Radschlupf (257a) der Hinterachse (240), im elektropneumatischen Bremssystem (2) ermittelt wird.

7. Verfahren zur Verzögerung eines Fahrzeuges (200) nach Anspruch 6, **dadurch gekennzeichnet, dass** der wenigstens eine Raddrehzahlsensor (23, 23a, 23b, 23c), wenigstens an einem Rad (224, 225) der Vorderachse (230) oder wenigstens an einem Rad (226, 227) der Hinterachse (240) des Bremssystems (2) angeordnet ist.

8. Verfahren zur Verzögerung eines Fahrzeugs (1; 200) nach einem der vorangegangenen Ansprüche, **dadurch gekennzeichnet, dass** das Redundanzsignal (14) mit einem ersten und/oder zweiten Bremssteuersignal (8, 9) in dem Bremswertgeber (5; 250) oder in dem Zentralmodul (28; 228) verglichen wird, um die Korrektheit oder das Vorhandensein des ersten und/oder des zweiten Bremssteuersignals (8, 9) zu plausibilisieren.

9. Elektropneumatisches Bremssystem (2) zur Durchführung eines Verfahrens nach einem der Ansprüche 1 bis 8, aufweisend:
wenigstens einen Bremswertgeber (5; 250) mit wenigstens einem Sensor (116, 117) zum Erzeugen von einem Bremssteuersignal (8, 9) zum Steuern und/oder Regeln des Bremssystems (2) und
wenigstens einem Achsmodulator (10; 210) für eine Vorderachse (3; 230) des Fahrzeugs (1; 200) zum Regeln und/oder Steuern wenigstens eines Hilfsbremsdrucks (17) an der Vorderachse (3; 230) und/oder wenigstens einem Achsmodulator 220) für eine Hinterachse (4; 240) des Fahrzeugs (1; 200), zum Regeln und/oder Steuern eines Hilfsbremsdrucks (18) an der Hinterachse (4; 240) des Fahrzeuges (1; 200), **dadurch gekennzeichnet, dass** das elektropneumatische Bremssystem (2) dazu ausgebildet ist, bei einem fehlenden oder fehlerhaften Bremssteuersignal (8, 9) des wenigstens einen Sensors (116, 117) im Bremswertgeber (5; 250) ein Redundanzsignal (14) an der Vorderachse (3; 230), an der Hinterachse (4, 240) oder alternativ in/an einem Anhängersteuerventil (122) zu ermitteln und das Redundanzsignal (14) zur Verzögerung der wenigstens einen Vorderachse (3; 230) oder alternativ der wenigstens einen Hinterachse (4; 240) zu verwenden.

10. Elektropneumatisches Bremssystem (2) nach Anspruch 9, **dadurch gekennzeichnet, dass** das Redundanzsignal (14) ein pneumatischer Redundanzdruck (19) zum Steuern und/oder Regeln des Hilfsbremsdrucks (17, 18) der Vorderachse (3; 230) oder alternativ der Hinterachse (4; 240) ist.

11. Elektropneumatisches Bremssystem (2) nach Anspruch 9 oder 10, **dadurch gekennzeichnet, dass** das Bremssystem (2) einen Drucksensor (20, 21, 127) zur Ermittlung des pneumatischen Redundanzdrucks (19) an der Vorderachse (3) oder der Hinterachse (4) oder dem Anhängersteuerventil (122) des Fahrzeugs (1) aufweist.

12. Elektropneumatisches Bremssystem (2) nach Anspruch 9 oder 10, **dadurch gekennzeichnet, dass** das elektropneumatische Bremssystem (2) eine pneumatische Einlassventilleitung (93) zu wenigstens einem Einlassventil (70) und wenigstens einem Auslassventil (71) des Achsmodulators (10) der Vorderachse (3) oder zu wenigstens einem Einlassventil (70a) und wenigstens einem Auslassventil (71a) des Achsmodulators (11) der Hinterachse (4) aufweist, wobei das Einlassventil (70) und das Auslassventil (71) des Achsmodulators (10) der Vorderachse (3) oder das Einlassventil (70a) und das Auslassventil (71a) des Achsmodulators (11) der Hinterachse (4) zur Ermittlung des Redundanzsignal (14) geschlossenen ist und wenigstens ein Vorderachs-Redundanzventil (35) des Achsmodulators (10) der Vorderachse (3) oder alternativ wenigstens ein Hinterachs-Redundanzventil (36) des Achsmodulators (11) der Hinterachse (4) aufweist, das zur Ermittlung des Redundanzsignals (14) geöffnet ist.

13. Elektropneumatisches Bremssystem (2) nach einem der Ansprüche 9 bis 12, **dadurch gekennzeichnet, dass** das Redundanzsignal (14) ein elektrisches Redundanzsignal (22) zum Steuern und/oder Regeln des Hilfsbremsdrucks (17, 18) der Vorderachse (3; 230) oder alternativ der Hinterachse (4; 240) ist.

14. Elektropneumatisches Bremssystem (2) nach Anspruch 13, **dadurch gekennzeichnet, dass** das elektropneumatische Bremssystem (2) wenigstens einen Raddrehzahlsensor (223, 223a, 223b, 223c) zur Ermittlung des elektrischen Redundanzsignals (22), insbesondere zu einer Ermittlung der Verzögerung (256) der der Vorderachse (230) oder der Verzögerung (256a) der Hinterachse (240) des Fahrzeugs (200), im Bremssystem (2) aufweist.

15. Elektropneumatisches Bremssystem (2) nach Anspruch 9 bis 14, **dadurch gekennzeichnet**, das in dem Bremswertgeber (250) oder in einem Zentralmodul (228) ein Vergleich des Redundanzsignals (14) mit einem ersten und/oder zweiten Bremssteuersignal (8, 9) erfolgt, um die Korrektheit oder das Vorhandensein des Bremssteuersignals (8, 9) zu plausibilisieren.

16. Elektropneumatisches Bremssystem (2) nach einem der Ansprüche 9 bis 15, **dadurch gekennzeichnet, dass** das erste elektronisches Bremssteuersignal (8) dazu ausgebildet ist ein Einlassventil (70) und ein Auslassventils (71) von dem Achsmodulator (10) der Vorderachse (3) anzusteuern und/oder das zweite elektronisches Bremssteuersignal (9) dazu ausgebildet ist, ein Einlassventil (70a) und ein Auslassventils (71a) von dem Achsmodulator (11) der Hinterachse (4) anzusteuern.

17. Elektropneumatisches Bremssystem (2) nach einem der Ansprüche 9 bis 16, **dadurch gekennzeichnet, dass** das Bremssystem (2) dazu ausgebildet ist, den Hilfsbremsdruck (17, 18) der Vorderachse (230) oder Hinterachse (240) mit dem Redundanzsignal (14) direkt zu steuern und/oder zu regeln.

18. Fahrzeug (1, 200) mit einem elektropneumatischem Bremssystem (2) nach einem der Ansprüche 9 bis 16 insbesondere zur Durchführung eines Verfahrens nach Anspruch 1 bis 8.

## Claims

1. A method for decelerating a vehicle (1; 200), wherein the vehicle includes an electro-pneumatic brake system (2), at least one front axle (3; 230), at least one rear axle (4; 240), and a brake value transmitter (5; 250) with at least one sensor (116, 117) for generating a brake control signal (8, 9) for performing open-loop and/or closed-loop control of the brake system (2), wherein the vehicle further includes at least one axle modulator (10; 210) for the front axle (3; 230) of the vehicle (1), for performing open-loop and/or closed-loop control of at least one front axle brake pressure (12) at the at least one front axle (3; 230), and/or at least one axle modulator (11; 220) for the rear axle (4; 240) of the vehicle (1; 200), for performing open-loop and/or closed-loop control of a rear axle brake pressure (13) at the at least one rear axle (4; 240) of the vehicle (1; 200), **characterized by** the following steps:
a. generating a redundancy signal (14) at a first axle, the front axle (3; 230) or rear axle (4; 240), or at a trailer control valve (122), and
b. performing open-loop and/or closed-loop control of an auxiliary brake pressure (17, 18) at another axle, the front axle (3; 230) or the rear axle (4; 240), via the redundancy signal (14).

2. The method for decelerating a vehicle (1) according to claim 1, **characterized in that** the redundancy signal (14) is a pneumatic redundancy pressure (19) of the front axle (3) or of the rear axle (4) or of the trailer control valve (122) for performing open-loop and/or closed-loop control of the auxiliary brake pressure (17, 18) of the front axle (3) or of the rear axle (4).

3. The method for decelerating a vehicle (1) according to claim 2, **characterized in that** the pneumatic redundancy pressure (19) is determined by a pressure sensor (20, 21, 127) at the front axle (3), at the rear axle (4) or at the trailer control valve (122) for performing open-loop and/or closed-loop control of the auxiliary brake pressure (17) of the front axle (3) or of the auxiliary brake pressure (18) of the rear axle (4).

4. The method for decelerating a vehicle (1) according to claim 3, **characterized in that** the pressure sensor (20, 21, 127) is integrated into the axle modulator (10) of the front axle (3) and/or into the axle modulator (11) of the rear axle (4) and/or a trailer control valve (122) of the electro-pneumatic brake system (2).

5. The method for decelerating a vehicle (200) according to claim 1, **characterized in that** the redundancy signal (14) is an electrical redundancy signal (22) for performing open-loop and/or closed-loop control of the auxiliary brake pressure (17) of the front axle (3) or of the auxiliary brake pressure (18) of the rear axle (4).

6. The method for decelerating a vehicle (200) according to claim 5, **characterized in that** the electrical redundancy signal (22) is determined at least with a wheel rotational speed sensor (23, 23a, 23b, 23c), in particular by decelerating (256) the front axle (230) or decelerating (256a) a rear axle (240) and/or by a wheel slip (257) of the front axle (230) or a wheel slip (257a) of the rear axle (240), in the electro-pneumatic brake system (2).

7. The method for decelerating a vehicle (200) according to claim 6, **characterized in that** the at least one wheel rotational speed sensor (23, 23a, 23b, 23c) is arranged at least on a wheel (224, 225) of the front axle (230) or at least on a wheel (226, 227) of the rear axle (240) of the brake system (2).

8. The method for decelerating a vehicle (1; 200) according to any of the preceding claims, **characterized in that** the redundancy signal (14) is compared with a first and/or second brake control signal (8, 9) in the brake value transmitter (5; 250) or in the central module (28; 228) in order to check a plausibility of a correctness or a presence of the first and/or of the second brake control signal (8, 9).

9. An electro-pneumatic brake system (2) for carrying out a method according to any of claims 1 to 8), comprising:
at least one brake value transmitter (5; 250) including at least one sensor (116, 117) configured to generate a brake control signal (8, 9) for performing open-loop and/or closed-loop control of the brake system (2) and at least one axle modulator (10; 210) for a front axle (3; 230) of the vehicle (1; 200) for performing closed-loop and/or open-loop control of at least one auxiliary brake pressure (17) at the front axle (3; 230), and/or at least one axle modulator (11; 220) for a rear axle (4; 240) of the vehicle (1; 200), for performing closed-loop and/or open-loop control of an auxiliary brake pressure (18) at the rear axle (4; 240) of the vehicle (1; 200), **characterized in that** the electro-pneumatic brake system (2) is configured to determine, when a brake control signal (8, 9) of the at least one sensor (116, 117) in the brake value transmitter (5; 250) is not present or is faulty, a redundancy signal (14) at the front axle (3; 230), at the rear axle (4; 240) or alternatively in/at a trailer control valve (122), and to use the redundancy signal (14) to decelerate the at least one front axle (3; 230) or alternatively the at least one rear axle (4; 240).

10. The electro-pneumatic brake system (2) according to claim 9, **characterized in that** the redundancy signal (14) is a pneumatic redundancy pressure (19) for performing open-loop and/or closed-loop control of the auxiliary brake pressure (17, 18) of the front axle (3; 230) or alternatively of the rear axle (4; 240).

11. The electro-pneumatic brake system (2) according to claim 9 or 10, **characterized in that** the brake system (2) comprises a pressure sensor (20, 21, 127) for determining the pneumatic redundancy pressure (19) at the front axle (3) or at the rear axle (4) or at the trailer control valve (122) of the vehicle (1).

12. The electro-pneumatic brake system (2) according to claim 9 or 10, **characterized in that** the electro-pneumatic brake system (2) comprises a pneumatic inlet valve line (93) leading to at least one inlet valve (70) and at least one outlet valve (71) of the axle modulator (10) of the front axle (3) or to at least one inlet valve (70a) and at least one outlet valve (71a) of the axle modulator (11) of the rear axle (4), wherein the inlet valve (70) and the outlet valve (71) of the axle modulator (10) of the front axle (3) or the inlet valve (70a) and the outlet valve (71a) of the axle modulator (11) of the rear axle (4) are closed in order to determine the redundancy signal (14), and comprise at least one front axle redundancy valve (35) of the axle modulator (10) of the front axle (3) or alternatively at least one rear axle redundancy valve (36) of the axle modulator (11) of the rear axle (4), which valve is opened in order to determine the redundancy signal (14).

13. The electro-pneumatic brake system (2) according to any of claims 9 to 12, **characterized in that** the redundancy signal (14) is an electrical redundancy signal (22) for performing open-loop and/or closed-loop control of the auxiliary brake pressure (17, 18) of the front axle (3; 230) or alternatively of the rear axle (4; 240).

14. The electro-pneumatic brake system (2) according to claim 13, **characterized in that** the electro-pneumatic brake system (2) comprises at least one wheel rotational speed sensor (223, 223a, 223b, 223c) for determining the electrical redundancy signal (22), in particular for determining the deceleration (256) of the front axle (230) or the deceleration (256a) of the rear axle (240) of the vehicle (200), in the brake system (2).

15. The electro-pneumatic brake system (2) according to claim 9 to 14, **characterized in that** in the brake value transmitter (250) or in a central module (228) a comparison with the redundancy signal (14) is made with a first and/or second brake control signal (8, 9) in order to check a plausibility of the brake control signal (8, 9) being correct or present.

16. The electro-pneumatic brake system (2) according to any of claims 9 to 15, **characterized in that** the first electronic brake control signal (8) is designed to actuate an inlet valve (70) and an outlet valve (71) of the axle modulator (10) of the front axle (3), and/or the second electronic brake control signal (9) is designed to actuate an inlet valve (70a) and an outlet valve (71a) of the axle modulator (11) of the rear axle (4).

17. The electro-pneumatic brake system (2) according to any of claims 9 to 16, **characterized in that** the brake system (2) is designed to perform open-loop and/or closed-loop control of the auxiliary brake pressure (17, 18) of the front axle (230) or of the rear axle (240) directly with the redundancy signal (14).

18. A vehicle (1, 200) having an electro-pneumatic brake system (2) according to any of claims 9 to 16, in particular for carrying out a method according to claim 1 to 8.

## Revendications

1. Procédé de décélération d'un véhicule (1 ; 200) qui présente un système de freinage (2) électropneumatique avec au moins un essieu avant (3 ; 230) et au moins un essieu arrière (4 ; 240), un transmetteur de valeur de freinage (5 ; 250) avec au moins un capteur (116 , 117) pour produire un signal de commande de freinage (8, 9) afin de commander et/ou réguler le système de freinage (2) et au moins un modulateur d'essieu (10 ; 210) pour l'essieu avant (3 ; 230) du véhicule (1), afin de commander et/ou réguler au moins une pression de freinage d'essieu avant (12) contre le au moins un essieu avant (3 ; 230) et/ou au moins un modulateur d'essieu 220) pour l'essieu arrière (4 ; 240) du véhicule (1 ; 200), afin de commander et/ou réguler une pression de freinage d'essieu arrière (13) contre le au moins un essieu arrière (4 ; 240) du véhicule (1 ; 200), **caractérisé par** les étapes suivantes :
a. production d'un signal de redondance (14) contre un premier essieu, l'essieu avant (3 ; 230) ou l'essieu arrière (4 ; 240), ou une valve de commande de remorque (122)
b. commande et/ou régulation d'une pression de freinage de secours (17, 18) contre un autre essieu, l'essieu avant (3 ; 230) ou l'essieu arrière (4 ; 240), au moyen du signal de redondance (14).

2. Procédé de décélération d'un véhicule (1) selon la revendication 1, **caractérisé en ce que** le signal de redondance (14) est une pression de redondance (19) pneumatique de l'essieu avant (3) ou de l'essieu arrière (4) ou de la valve de commande de remorque (122) pour commander et/ou réguler la pression de freinage de secours (17, 18) de l'essieu avant (3) ou de l'essieu arrière (4).

3. Procédé de décélération d'un véhicule (1) selon la revendication 2, **caractérisé en ce que** la pression de redondance (19) pneumatique est établie au moyen d'un capteur de pression (20, 21, 127) contre l'essieu avant (3), l'essieu arrière (4) ou la valve de commande de remorque (122) pour commander et/ou réguler la pression de freinage de secours (17) de l'essieu avant (3) ou la pression de freinage de secours (18) de l'essieu arrière (4).

4. Procédé de décélération d'un véhicule (1) selon la revendication 3, **caractérisé en ce que** le capteur de pression (20, 21, 127) est intégré dans le modulateur d'essieu (10) de l'essieu avant (3) et/ou dans le modulateur d'essieu (11) de l'essieu arrière (4) et/ou une valve de commande de remorque (122) du système de freinage (2) électropneumatique.

5. Procédé de décélération d'un véhicule (200) selon la revendication 1, **caractérisé en ce que** le signal de redondance (14) est un signal de redondance électrique (22) pour commander et/ou réguler la pression de freinage de secours (17) de l'essieu avant (3) ou la pression de freinage de secours (18) de l'essieu arrière (4).

6. Procédé de décélération d'un véhicule (200) selon la revendication 5, **caractérisé en ce que** le signal de redondance électrique (22) est établi dans le système de freinage (2) électropneumatique au moins avec un capteur de vitesse de rotation de roue (23, 23a, 23b, 23c), en particulier par une décélération (256) de l'essieu avant (230) ou la décélération (256a) d'un essieu arrière (240) et/ou via un glissement de roue (257) de l'essieu avant (230) ou un glissement de roue (257a) de l'essieu arrière (240).

7. Procédé de décélération d'un véhicule (200) selon la revendication 6, **caractérisé en ce que** le au moins un capteur de vitesse de rotation de roue (23, 23a, 23b, 23c) est agencé au moins contre une roue (224, 225) de l'essieu avant (230) ou au moins contre une roue (226, 227) de l'essieu arrière (240) du système de freinage (2).

8. Procédé de décélération d'un véhicule (1 ; 200) selon l'une des revendications précédentes, **caractérisé en ce que** le signal de redondance (14) est comparé à un premier et/ou second signal de commande de freinage (8, 9) dans le transmetteur de valeur de freinage (5 ; 250) ou dans le module central (28 ; 228) pour rendre plausible l'exactitude ou la présence du premier et/ou du second signal de commande de freinage (8, 9).

9. Système de freinage (2) électropneumatique destiné à exécuter un procédé selon l'une des revendications 1 à 8, qui présente :
au moins un transmetteur de valeur de freinage (5 ; 250) avec au moins un capteur (116 , 117) pour produire un signal de commande de freinage (8, 9) afin de commander et/ou réguler le système de freinage (2) et au moins un modulateur d'essieu (10 ; 210) pour un essieu avant (3 ; 230) du véhicule (1 ; 200) afin de réguler et/ou commander au moins une pression de freinage de secours (17) contre l'essieu avant (3 ; 230) et/ou au moins un modulateur d'essieu (11 ; 220) pour un essieu arrière (4 ; 240) du véhicule (1 ; 200), afin de réguler et/ou commander une pression de freinage de secours (18) contre l'essieu arrière (4 ; 240) du véhicule (1 ; 200), **caractérisé en ce que** le système de freinage (2) électropneumatique est conçu pour, lors d'un signal de commande de freinage (8, 9) manquant ou défectueux du au moins un capteur (116, 117) dans le transmetteur de valeur de freinage (5 ; 250), établir un signal de redondance (14) contre l'essieu avant (3 ; 230), contre l'essieu arrière (4 ; 240) ou alternativement dans/contre une valve de commande de remorque (122) et utiliser le signal de redondance (14) pour décélérer le au moins un essieu avant (3 ; 230) ou alternativement le au moins un essieu arrière (4 ; 240).

10. Système de freinage (2) électropneumatique selon la revendication 9, **caractérisé en ce que** le signal de redondance (14) est une pression de redondance (19) pneumatique pour commander et/ou réguler la pression de freinage de secours (17, 18) de l'essieu avant (3 ; 230) ou alternativement de l'essieu arrière (4 ; 240).

11. Système de freinage (2) électropneumatique selon la revendication 9 ou 10, **caractérisé en ce que** le système de freinage (2) présente un capteur de pression (20, 21, 127) pour établir la pression de redondance (19) pneumatique contre l'essieu avant (3) ou l'essieu arrière (4) ou la valve de commande de remorque (122) du véhicule (1).

12. Système de freinage (2) électropneumatique selon la revendication 9 ou 10, **caractérisé en ce que** le système de freinage (2) électropneumatique présente un tuyau de valve d'admission (93) pneumatique vers au moins une valve d'admission (70) et au moins une valve d'échappement (71) du modulateur d'essieu (10) de l'essieu avant (3) ou vers au moins une valve d'admission (70a) et au moins une valve d'échappement (71a) du modulateur d'essieu (11) de l'essieu arrière (4), dans lequel la valve d'admission (70) et la valve d'échappement (71) du modulateur d'essieu (10) de l'essieu avant (3) ou la valve d'admission (70a) et la valve d'échappement (71a) du modulateur d'essieu (11) de l'essieu arrière (4) sont fermées pour établir le signal de redondance (14) et présentent au moins une valve de redondance d'essieu avant (35) du modulateur d'essieu (10) de l'essieu avant (3) ou alternativement au moins une valve de redondance d'essieu arrière (36) du modulateur d'essieu (11) de l'essieu arrière (4), qui est ouverte pour établir le signal de redondance (14).

13. Système de freinage (2) électropneumatique selon l'une des revendications 9 à 12, **caractérisé en ce que** le signal de redondance (14) est un signal de redondance électrique (22) pour commander et/ou réguler la pression de freinage de secours (17, 18) de l'essieu avant (3 ; 230) ou alternativement de l'essieu arrière (4 ; 240).

14. Système de freinage (2) électropneumatique selon la revendication 13, **caractérisé en ce que** le système de freinage (2) électropneumatique présente au moins un capteur de vitesse de rotation de roue (223, 223a, 223b, 223c) pour établir le signal de redondance électrique (22), en particulier pour établir la décélération (256) de l'essieu avant (230) ou la décélération (256a) de l'essieu arrière (240) du véhicule (200), dans le système de freinage (2).

15. Système de freinage (2) électropneumatique selon la revendication 9 à 14, **caractérisé en ce que** dans le transmetteur de valeur de freinage (250) ou dans un module central (228) une comparaison du signal de redondance (14) avec un premier et/ou second signal de commande de freinage (8, 9) est effectuée pour rendre plausible l'exactitude ou la présence du signal de commande de freinage (8, 9).

16. Système de freinage (2) électropneumatique selon l'une des revendications 9 à 15, **caractérisé en ce que** le premier signal de commande de freinage (8) électronique est conçu pour piloter une valve d'admission (70) et une valve d'échappement (71) depuis le modulateur d'essieu (10) de l'essieu avant (3) et/ou le second signal de commande de freinage (9) électronique est conçu pour piloter une valve d'admission (70a) et une valve d'échappement (71a) depuis le modulateur d'essieu (11) de l'essieu arrière (4).

17. Système de freinage (2) électropneumatique selon l'une des revendications 9 à 16, **caractérisé en ce que** le système de freinage (2) est conçu pour directement commander et/ou réguler la pression de freinage de secours (17, 18) de l'essieu avant (230) ou de l'essieu arrière (240) avec le signal de redondance (14).

18. Véhicule (1 ; 200) avec un système de freinage (2) électropneumatique selon l'une des revendications 9 à 16, en particulier pour l'exécution d'un procédé selon la revendication 1 à 8.
